# EUROPEAN PATENT APPLICATION

(11) **EP 4 538 174 A1**
(43) Date of publication of application: **16.04.2025**
(21) Application number: 23819814.7
(22) Date of filing: 05.06.2023
(51) Int. Cl.: B64D 1/08, B64C 27/08, B64D 1/12, B64D 47/08, B64F 1/36, F42B 8/20, F42B 8/22, F42B 8/24, F42B 25/00, F42B 27/00

(54) **FALL TRAJECTORY CONTROL SYSTEM**

(30) Priority: 06.06.2022 JP 2022091896
(71) Applicant: Yamamoto, Kazuhiro, Tokyo, 146-0081 (JP)
(72) Inventor: Yamamoto, Kazuhiro, Tokyo, 146-0081 (JP)
(74) Representative: Hoffmann Eitle
(86) International application number: PCT/JP2023/020897
(87) International publication number: WO 2023/238834

(57) **Abstract**

A fall trajectory control system (1) comprising a drone (2) including an imaging unit capturing an image in at least a vertically downward direction, and a drop object holding part capable of holding a drop object (6) and releasing a state of holding the drop object (6), and capable of flying due to rotation of a drone side propeller, and an operation terminal (4) used by an operator controlling the drone (2), wherein the operation terminal (4) includes a display displaying the image captured by the imaging unit, and a trajectory operation unit operated by the operator and used for operating a fall trajectory of the drop object (6) following the state of holding the drop object (6) released by the drop object holding part, and wherein the drone (2) or the drop object (6) includes a trajectory control unit controlling the fall trajectory of the drop object (6) in response to operation of the trajectory operation unit operated by the operator with a visual confirmation of the image displayed on the display.

## Description

### BACKGROUND

### 1. Technical Field

The present invention relates to a fall trajectory control system that controls a fall trajectory of a drop object dropped from a drone.

### 2. Description of the Background

Techniques have been developed to drop the drop object from the drone, and one of the techniques is disclosed in Patent Literature (PTL) 1, for example.
The technique disclosed in PTL 1 includes a pilotless-flying unmanned flight vehicle, or the drone, including a holding means where a release operation is performed with a radio adjustment, and a life-saving equipment, or the drop object, attached to the holding means. The release operation of the holding means releases the drop object, thus the drop object is dropped from the holding means.

### CITATION LIST

### Patent Literature

Patent Literature 1: Patent Bulletin #6366743

### SUMMARY OF INVENTION

### 1. Technical Problem

The technique disclosed in PTL 1 is incapable of controlling the fall trajectory of the drop object dropped from the drone flying at a high position, for the fall trajectory deviating from a trajectory intended by an operator due to a strong wind, for example. Thus, this may have a difficulty to provide the life-saving equipment as the drop object for a person in need of rescue.

In response to the above issue, one or more aspects of the present invention are directed to the fall trajectory control system that is capable of controlling the fall trajectory of the drop object.

### 2. Solution to Problem

It is intended to provide the fall trajectory control system according to one aspect of the present invention including the drone and an operation terminal used by the operator to control the drone. The drone includes a drop object holding part capable of holding the drop object and releasing a state of holding the drop object, and is capable of flying due to rotation of a drone side propeller. The drone or the drop object includes an imaging unit capturing an image in at least a vertically downward direction. The drone includes a drone side transmitter transmitting an information signal to the operation terminal and the drop object, and a drone side receiver receiving the information signal from the operation terminal. The operation terminal includes a display displaying the image captured by the imaging unit, and a trajectory operation unit operated by the operator and used for operating the fall trajectory of the drop object, following the state of holding the drop object released by the drop object holding part. The drone or the drop object includes a trajectory control unit controlling the fall trajectory of the drop object in response to operation of the trajectory operation unit operated by the operator with a visual confirmation of the image displayed on the display.

### 3. Advantageous Effects of Invention

One aspect of the present invention can provide the fall trajectory control system that is capable of controlling the fall trajectory of the drop object.

### BRIEF DESCRIPTION OF THE DRAWINGS

[FIG. 1] is a block diagram of a configuration of the fall trajectory control system according to a first embodiment of the present invention.
[FIG. 2] is the block diagram of the configuration of the drone.
[FIG. 3] is the block diagram of the configuration of the operation terminal.
[FIG. 4] is a figure of the configuration of the drop object.
[FIG. 5] is the figure of the configuration of a modified drop object.
[FIG. 6] is the block diagram of the configuration of a drop object control unit.
[FIG. 7] is the figure of the configuration of the drop object according to a second embodiment.
[FIG. 8] is the block diagram of the configuration of the drop object control unit.

### DETAILED DESCRIPTION

Embodiments of the present invention will now be described below with reference to the drawings. Identical or similar signs are provided for identical or similar places in each drawing that are referred to in the following description. The drawings are, however, schematic, and specific dimensions may be determined by taking into account the following description. Different parts of a dimensional relation or ratio can be included among the drawings.
The embodiments of the present invention described below illustrate the fall trajectory control system to embody a technical idea of the present invention. The technical idea of the present invention may not specify material, a shape, the configuration, or a placement of a component with their corresponding description given below. The technical idea of the present invention can make various changes in the technical scope prescribed by the claims that are described in the scope of claims. Directions of left and right, and up and down in the following description may be defined for convenience of explanation, however, do not limit the technical idea of the present invention. For example, left and right, and up and down can be used interchangeably in rotating a plane of paper 90 degrees. Left can be right, and right can be left in rotating the plane of paper 180 degrees.

### First Embodiment

### Configuration

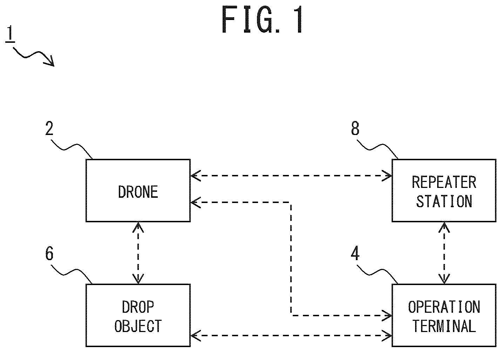

The configuration of the fall trajectory control system 1 according to the first embodiment will now be described with reference to FIGs. 1 to 6.

The fall trajectory control system 1 includes the drone 2 (DRONE), which is an unmanned flight vehicle, and the operation terminal 4 (OPERATION TERMINAL) as shown in FIG. 1.

The fall trajectory control system 1 is a system that controls the fall trajectory of the drop object 6 (DROP OBJECT) dropped from the drone 2 toward a target location intended by the operator. The operator operates the operation terminal 4 to control the drone 2 that holds the drop object 6.

The information signal between the operation terminal 4 and the drone 2 is transmitted and received directly or via a repeater station 8 (REPEATER STATION). For the information signal transmitted and received between the drone 2 and the operation terminal 4 via the repeater station 8, this will be described according to the first embodiment, as an example. One or more repeater station 8 may be used.

A radio wave, light, or a sound wave can be used, for example, for the information signal transmitted and received between the operation terminal 4 and the drone 2, between the operation terminal 4 and the repeater station 8, between the repeater station 8 and the drone 2, and between the drone 2 and the drop object 6.

A situation using the fall trajectory control system 1 according to the first embodiment, as an example, is presumed that the drone 2 moves above a road blocked by a fallen tree due to a large-scale disaster and destroys the fallen tree blocking the road with a contact-type bomb that is the drop object 6, so that the road may be open.

### Drone

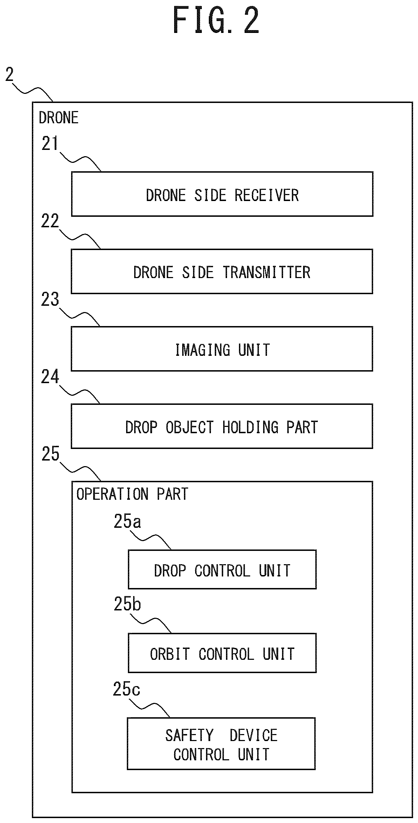

The drone 2 includes the four drone side propellers (not shown), four drone side motors (not shown), and a Global Positioning System (GPS) antenna (not shown), for example. The drone 2 includes the drone side receiver 21 (DRONE SIDE RECEIVER), the drone side transmitter 22 (DRONE SIDE TRANSMITTER), and the imaging unit 23 (IMAGING UNIT) as shown in FIG. 2. The drone 2 includes the drop object holding part 24 (DROP OBJECT HOLDING PART), and an operation part 25 (OPERATION PART).

The drone side propeller is a rotatable propeller.

The drone side motor includes an electric motor, for example, and rotates the drone side propeller.

The four drone side propellers and the four drone side motors are each placed at each tip of four extension arms radially extending from a body of the drone 2 (not shown).

The GPS antenna is placed on a top surface of the body, for example. The GPS antenna is an antenna that receives the information signal transmitted from the drop object 6.

The drone side receiver 21 receives the information signal transmitted from the operation terminal 4 or the repeater station 8, and the drop object 6.

For the drone side receiver 21 receiving the information signal transmitted from the repeater station 8 and the drop object 6, this will be described according to the first embodiment, as an example.

The drone side transmitter 22 transmits the information signal from the drone 2 to the operation terminal 4 or the repeater station 8, and the drop object 6. For the drone side transmitter 22 transmitting the information signal from the drone 2 to the repeater station 8 and the drop object 6, this will be described according to the first embodiment, as an example.

The imaging unit 23 includes a camera (a wide-angle camera, an infrared camera), for example. The imaging unit 23 is placed on an underside of the body, for example, and is capable of capturing the image in the vertically downward direction from the drone 2. A possible imaging range with the imaging unit 23 includes the vertically downward direction from the drone 2, and a wide-range imaging is available in a region viewed from the underside of the body during flight of the drone 2, for example. The information signal includes the image captured by the imaging unit 23, and is transmitted as a captured-image signal to the operation terminal 4 or the repeater station 8 via the drone side transmitter 22.

The configuration of the imaging unit 23 may provide a capability of imaging all directions.

The drop object holding part 24 includes a plurality of arms and an angle variation actuator to operate the arm, and can hold the drop object 6 and release the state of holding the drop object 6. The drop object holding part 24 holds the drop object 6 at a position where the imaging unit 23 is capable of imaging.

The operation part 25 includes a Central Processing Unit (CPU) and a memory unit such as a non-volatile memory, for example. The operation part 25 includes a drop control unit 25a (DROP CONTROL UNIT), the trajectory control unit 25b (TRAJECTORY CONTROL UNIT), and a safety device control unit 25c (SAFETY DEVICE CONTROL UNIT).

The operation part 25 also includes a part to perform a flight-related control for the drone 2, not shown in the drawing.

For the information signal received from the operation terminal 4 including a drop signal described below, the drop control unit 25a transmits to the drop object holding part 24 a command that releases the state of holding the drop object 6. The drop object holding part 24 receives from the drop control unit 25a the command to release the state of holding the drop object 6, driving the angle variation actuator to operate the arm. Thus, the state of holding the drop object 6 with the arm is transitioned to the released state of holding the drop object 6.

The trajectory control unit 25b computes the fall trajectory of the drop object 6 in response to the operation of the trajectory operation unit, or an operation status, described below. The computing process of the fall trajectory of the drop object 6 in response to the operation of the trajectory operation unit is performed for the information signal received from the operation terminal 4, which includes the command to operate the fall trajectory of the drop object 6, following the state of holding the drop object 6 released by the drop object holding part 24. The trajectory control unit 25b computes a drive status of a servomotor (an amount of rotation, a speed of rotation) described below in response to the computed trajectory. The trajectory control unit 25b transmits to the drop object 6 a servomotor drive signal that is the information signal including the computed drive status.

Thus, the trajectory control unit 25b controls the fall trajectory of the drop object 6 in response to the operation of the trajectory operation unit.

The trajectory control unit 25b corrects motion of the servomotor that is controlled by an angle variation actuator control unit described below in response to the fall trajectory of the drop object 6. The fall trajectory is computed in response to a posture of a shell, or a falling aerial posture, and the operation of the trajectory operation unit. The correcting process of the motion of the servomotor is performed for the information signal received from the drop object 6, which includes a drop object posture signal described below. The fall trajectory of the drop object 6 computed in response to the operation of the trajectory operation unit is the trajectory computed without considering the posture of the shell, specifically. Thus, the trajectory control unit 25b corrects the motion or a motion status of the servomotor (an angle of rotation of the servomotor, the speed of rotation of the servomotor) that is controlled by the angle variation actuator control unit in response to the operation of the trajectory operation unit, so that the fall trajectory varied in response to the posture of the shell may be changed to the trajectory computed without considering the posture of the shell. The trajectory control unit 25b transmits to the drop object 6 a motion correction signal that is the information signal including the corrected motion status of the servomotor.

For example, the trajectory control unit 25b corrects the motion status of the servomotor that is controlled by the angle variation actuator control unit in response to the rotated angle of the drop object 6 (the angle of rotation) for the drop object 6 rotating in the air.

The safety device control unit 25c transmits to the drop object 6 a detonation stop signal that is the information signal to restart a safety device for the information signal received from the operation terminal 4. The information signal includes the drop object posture signal described below.

The drop object 6 is a bomb where the safety device functions during storage to prevent explosion. The drop object 6 is dropped with the released state of the safety device.

### Operation Terminal

The operation terminal 4 is a terminal that is used by the operator to control the drone 2, and includes a portable personal computer, a stationary personal computer, or a smartphone, for example.

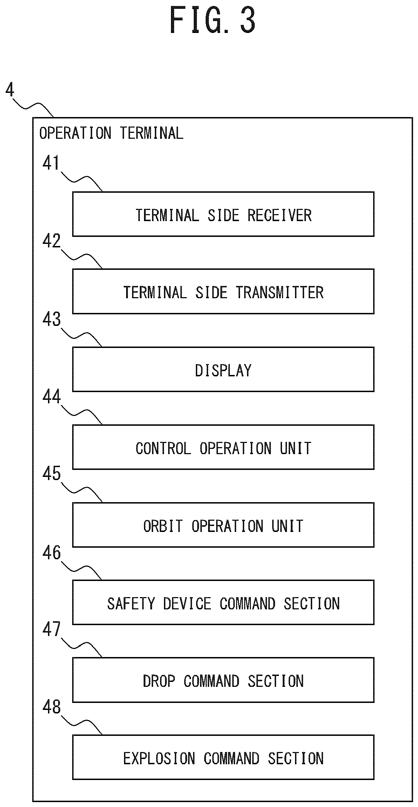

The operation terminal 4 includes a terminal side receiver 41 and a terminal side transmitter 42 as shown in FIG. 3. The operation terminal 4 includes the display 43, a control operation unit 44, and the trajectory operation unit 45. The operation terminal 4 includes a safety device command section 46, a drop command section 47, and an explosion command section 48.

The terminal side receiver 41 receives the information signal transmitted from the drone 2 or the repeater station 8.

For the terminal side receiver 41 receiving the information signal transmitted from the repeater station 8, this will be described according to the first embodiment, as an example.

The terminal side transmitter 42 transmits the information signal from the operation terminal 4 to the drone 2 or the repeater station 8.

For the terminal side transmitter 42 transmitting the information signal from the operation terminal 4 to the repeater station 8, this will be described according to the first embodiment, as an example.

The display 43 includes the display, or a touch panel that is capable of displaying a graphic image. The display 43 displays in real time the image included in the captured-image signal. Thus, the display 43 displays the image that is captured by the imaging unit 23.

The control operation unit 44 includes a controller that includes a mouse, a joystick, a trackball, a button, and a lever (a game controller), for example, and is used by the operator to control the drone 2.

The control operation unit 44 transmits to the drone 2 or the repeater station 8 via the terminal side transmitter 42 the information signal as a control status signal. The information signal includes the operation status of the control operation unit 44 (the amount of operation, the angle of operation, the speed of operation) that is operated by the operator.

The trajectory operation unit 45 includes the controller that includes the mouse, the joystick, the trackball, and the lever (the game controller) as in the control operation unit 44, for example, and is operated by the operator. The control operation unit 44 may function as the trajectory operation unit 45, and vice versa, by introducing an identical configuration.

The trajectory operation unit 45 is used to operate the fall trajectory of the drop object 6, following the state of holding the drop object 6 released by the drop object holding part 24.

The trajectory operation unit 45 transmits to the drone 2 or the repeater station 8 via the terminal side transmitter 42 the information signal as an operation status signal, which includes the operation status of the trajectory operation unit 45 (the amount of operation, the angle of operation, the speed of operation) that is operated by the operator.

The safety device command section 46 includes the button and the lever, for example. The safety device command section 46, operated by the operator, transmits to the drone 2 or the repeater station 8 via the terminal side transmitter 42 the information signal as a safety device release signal. The information signal includes the command to release the safety device included in the drop object 6. The safety device command section 46, operated by the operator, transmits to the drone 2 or the repeater station 8 via the terminal side transmitter 42 the information signal as a safety device restart signal. The information signal includes the command to restart the safety device included in the drop object 6.

The drop command section 47 includes the button and the lever, for example. The drop command section 47, operated by the operator, transmits to the drone 2 or the repeater station 8 via the terminal side transmitter 42 the information signal as the drop signal. The information signal includes the command to release the state of holding the drop object 6.

The explosion command section 48 includes the button and the lever, for example. The explosion command section 48, operated by the operator, transmits to the drone 2 or the repeater station 8 via the terminal side transmitter 42 the information signal as an explosion signal. The information signal includes the command to explode the drop object 6.

### Drop Object

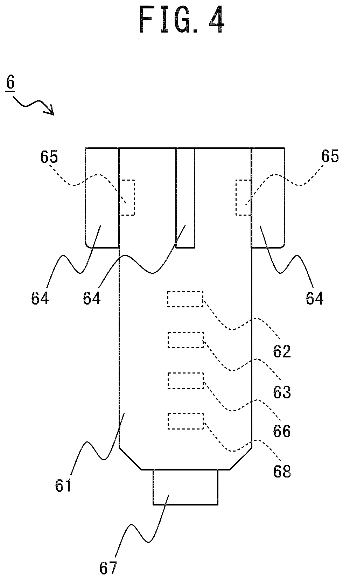

The drop object 6 includes the shell 61, a drop object side receiver 62, a drop object side transmitter 63, vanes 64, servomotors 65, a posture detector 66, a fuze 67, and the drop object control unit 68 as shown in FIG. 4.

The shell 61 has a hollow cylindrical shape, and is filled with gunpowder (an explosive).

The drop object side receiver 62 receives the information signal transmitted from the drone 2.

The drop object side transmitter 63 transmits the information signal from the drop object 6 to the drone 2.

The vane 64 has a plate shape, and is placed at the position on the outer surface of the shell 61 to receive air resistance during a fall of the drop object 6.

For the shell 61 placed with the four vanes 64, this will be described according to the first embodiment, as an example.

Each of the four vanes 64 is placed at equal intervals viewed in a longitudinal direction on an outer surface of the shell 61.

The servomotor 65 connects the shell 61 and the vane 64, and drives to vary the angle of the vane 64 relative to the shell 61.

The four vanes 64 are placed in the shell 61 as described above according to the first embodiment, so that the drop object 6 includes the four servomotors 65. Thus, the servomotor 65 includes the angle variation actuator to vary the angle of the vane 64. The vane 64 and the servomotor 65 function as helms to control the trajectory of the drop object 6 in controlling the fall trajectory of the drop object 6. Propulsion may be generated at the drop object 6 for the vane 64 and the servomotor 65 functioning as the helms. Gravity acting on the falling drop object 6 corresponds to the propulsion, as well.

The posture detector 66 includes a gyro sensor, for example, and detects the posture of the shell 61, or the falling aerial posture. The posture detector 66 transmits to the drone 2 via the drop object side transmitter 63 the information signal as the drop object posture signal. The information signal includes the detected posture of the shell 61.

Thus, the posture detector 66 detects the posture of the drop object 6.

The fuze 67 includes the safety device and a detonator. The safety device is released in receiving the safety device release signal, and restarted in receiving the safety device restart signal.

The fuze 67 ignites the detonator for receiving an external force with a predetermined strength under the released state of the safety device, and detonates the explosive that is filled inside the shell 61.

The drop object 6 is adopted as the contact-type bomb as described above according to the first embodiment. Thus, the fuze 67 is a contact fuze (CONTACT FUZE).

The drop object control unit 68 includes the Central Processing Unit (CPU) and the memory unit such as the non-volatile memory, for example.

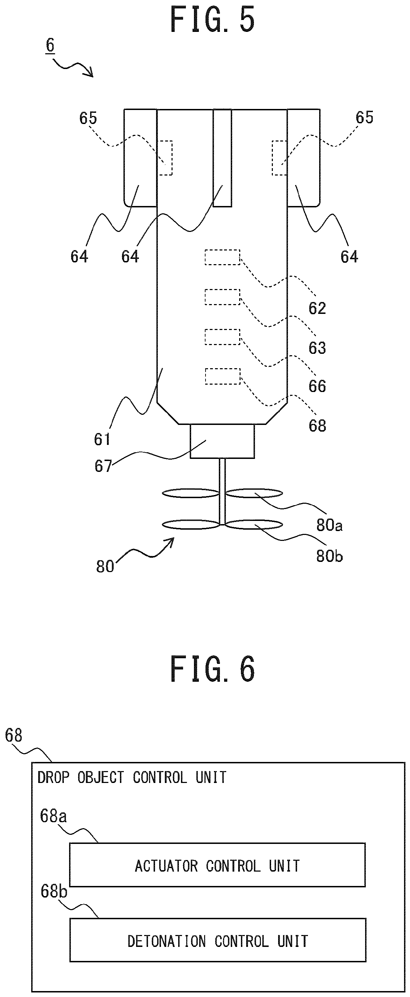

The drop object control unit 68 (DROP OBJECT CONTROL UNIT) includes the angle variation actuator control unit 68a (ANGLE VARIATION ACTUATOR CONTROL UNIT) as shown in FIG. 6. The drop object control unit 68 includes a detonation control unit 68b (DETONATION CONTROL UNIT).

The angle variation actuator control unit 68a controls the motion of the servomotor 65 in response to the drive status included in the servomotor drive signal transmitted from the drone 2, and the motion status included in the motion correction signal transmitted from the drone 2.

The servomotor drive signal is a signal that is computed in response to the operation of the trajectory operation unit 45 operated by the operator as described above. Thus, the angle variation actuator control unit 68a controls the motion of the servomotor 65 that is the angle variation actuator in response to the operation of the trajectory operation unit 45 operated by the operator.

The motion correction signal is the signal that is computed in response to the posture of the shell 61, or the falling aerial posture, and the operation of the trajectory operation unit 45 operated by the operator. Thus, the trajectory control unit 25b corrects the motion of the servomotor 65 controlled by the angle variation actuator control unit 68a in response to the posture of the shell 61 detected by the posture detector 66, controlling the fall trajectory of the drop object 6.

The detonation control unit 68b varies from the released state of the safety device at the fuze 67 to the restarted state of the safety device at the fuze 67 in response to the detonation stop signal transmitted from the drone 2.

### Repeater Station

The repeater station 8 includes a data relay device equipped at the drone that is different from a communication satellite, an aircraft (a rotorcraft, a fixed-wing aircraft), or the drone 2 included in the fall trajectory control system 1, for example.

The repeater station 8 transmits and receives the information signal for the operation terminal 4 and the drone 2, optionally.

For the configuration to receive and transmit the information signal between the drone 2 and the operation terminal 4 via the single repeater station 8, this will be described according to the first embodiment, as an example.

The configuration may be capable of receiving and transmitting the information signal between the repeater station 8 and the drop object 6, for example.

### Motion

The motion performed by the fall trajectory control system 1 according to the first embodiment will now be described with reference to FIGs. 1 to 6.

The operator operates the control operation unit 44 to transmit the control status signal to the drone 2 in using the fall trajectory control system 1, controlling the drone 2 where the drop object holding part 24 holds the drop object 6 to move to a destination above the road blocked by the fallen tree. An autopilot may be used to move the drone 2.

The operator moves the drone 2 above the destination, operating the drop command section 47 at the position appropriate for dropping the drop object 6 toward the fallen tree with the visual confirmation of the image displayed on the display 43. The operator operates the drop command section 47 in the situation where the drone 2 flying at the high position (more than 50 meters (m) above the ground, for example) is moved above the fallen tree in operating the drop command section 47. The drone 2 flies high in order to minimize damage to the drone 2 due to a blast, for example.

The drop signal is transmitted to the drone 2 via the repeater station 8 for operating the drop command section 47. The command to release the state of holding the drop object 6 is transmitted from the drop control unit 25a to the drop object holding part 24 at the drone 2 that receives the drop signal. Thus, the state of the drop object holding part 24 is transitioned from the state of holding the drop object 6 to the state without holding the drop object 6.

The operator operates the trajectory operation unit 45 in order to contact the drop object 6 with the fallen tree with the visual confirmation of the image displayed on the display 43, following the drop object 6 dropped from the drone 2. The operation status signal is transmitted to the drone 2 via the repeater station 8 for operating the trajectory operation unit 45. The trajectory control unit 25b at the drone 2 that receives the operation status signal computes the fall trajectory of the drop object 6, which is in response to the operation status of the trajectory operation unit 45 included in the operation status signal, so that the servomotor driving signal is transmitted to the drop object 6.

The angle variation actuator control unit 68a at the drop object 6 that receives the servomotor drive signal controls the motion of the servomotor 65, which is in response to the drive status included in the servomotor drive signal, so that the angle variation actuator control unit 68a varies the angle of the vane 64 relative to the shell 61. Thus, the angle variation actuator control unit 68a controls the fall trajectory of the drop object 6.

The posture detector 66 at the drop object 6 that is dropped from the drone 2 detects the posture of the shell 61, or the falling aerial posture, so that the drop object posture signal is transmitted to the drone 2.

The trajectory control unit 25b at the drone 2 that receives the drop object posture signal corrects the motion of the servomotor 65 that is controlled by the angle variation actuator control unit 68a, which is in response to the trajectory computed in response to the posture of the shell 61 and the operation of the trajectory operation unit 45. The trajectory control unit 25b transmits the motion correction signal to the drop object 6.

For the operator operating the trajectory operation unit 45 with the visual confirmation of the image displayed on the display 43 to vary the trajectory of the drop object 6 to the right on a screen of the display 43, as an example, a rightward direction on the screen of the display 43 corresponds to the rightward direction on the image captured by the imaging unit 23. Thus, the drop object 6 drops at the angle of rotation that is different from the angle of rotation, or a rotational angle with an axis of rotation defined in a vertical direction, of the drop object 6 dropped from the drone 2.

The drop object 6 is dropped from the drone 2 at the angle of rotation to be zero degrees relative to the axis of rotation defined in the vertical direction where zero degrees (0° ) is set to magnetic north, for example. The angle of rotation of the drop object 6 becomes 30 degrees due to the rotation of the drop object 6 one second after the drop object 6 is dropped from the drone 2. The operator operates the trajectory operation unit 45 for varying the trajectory of the drop object 6 to the right on the screen without considering the angle of rotation of the drop object 6. The trajectory control unit 25b corrects the angle of rotation of the drop object 6 (30 degrees), correcting the motion of the servomotor 65 that is controlled by the angle variation actuator control unit 68a.

The trajectory control unit 25b may include the configuration of correcting the motion of the servomotor 65 that is controlled by the angle variation actuator control unit 68a, which is computed using a three-dimensional rotation matrix, for example, in response to each variation of roll, pitch, and yaw generated at the drop object 6.

The angle variation actuator control unit 68a at the drop object 6 that receives the motion correction signal controls the motion of the servomotor 65, which is in response to the motion status included in the motion correction signal, so that the angle variation actuator control unit 68a varies the angle of the vane 64 relative to the shell 61. Thus, the trajectory control unit 25b corrects the motion status of the servomotor 65 that is controlled by the angle variation actuator control unit 68a, and controls the fall trajectory of the drop object 6, so that the fall trajectory varied in response to the posture of the shell 61 may be changed to the trajectory computed without considering the posture of the shell 61.

For the drop object 6 certain or expected to contact with the fallen tree blocking the road, which is dropped with the fall trajectory controlled by the operator, the operator drops the drop object 6 with the released safety device toward the fallen tree without operating the safety device command section 46. This reduces the damage on the road, and destroys the fallen tree with the contact-type bomb that is the drop object 6 to improve a traffic situation at an area affected by the large-scale disaster.

For the drop object 6 certain or expected not to contact with the fallen tree blocking the road, the operator operates the safety device command section 46 to transmit the safety device restart signal to the drone 2 via the repeater station 8. This prevents the explosion of the contact-type bomb that is the drop object 6 due to contact with the road, thus reducing the damage on the road.

For the drop object 6 contacting with the fallen tree but unexploded, or preferred to explode just prior to contacting with the fallen tree, the operator operates the explosion command section 48 to transmit the detonation signal to the drone 2 via the repeater station 8.

The first embodiment described above is an example of the present invention, and the present invention is not limited to the first embodiment described above. For embodiments other than the first embodiment, the present invention can make various changes in response to the design within the scope that does not deviate from the technical idea related to the present invention.

### Effects of the First Embodiment

The fall trajectory control system 1 according to the first embodiment can produce effects described below.
(1) The fall trajectory control system 1 includes the drone 2 including the imaging unit 23 capturing the image in the at least vertically downward direction, including the drop object holding part 24 capable of holding the drop object 6 and releasing the state of holding the drop object 6, and capable of flying due to the rotation of the drone side propeller. The fall trajectory control system 1 includes the operation terminal 4 used by the operator to control the drone 2. The drone 2 includes the drone side transmitter 22 transmitting the information signal to the operation terminal 4, and the drone side receiver 21 receiving the information signal from the operation terminal 4 and the drop object 6. The operation terminal 4 includes the display 43 displaying the image captured by the imaging unit 23, and the trajectory operation unit 45 operated by the operator and used for operating the fall trajectory of the drop object 6, following the state of holding the drop object 6 released by the drop object holding part 24. The fall trajectory control system 1 includes the trajectory control unit 25b controlling the fall trajectory of the drop object 6 in response to the operation of the trajectory operation unit 45 operated by the operator with the visual confirmation of the image displayed on the display 43.

Thus, the fall trajectory of the drop object 6 dropped from the drone 2 can be controlled where the drone 2 flies at the high position (more than 50 meters (m) above the ground, for example), for the fall trajectory deviating from the trajectory intended by the operator due to the strong wind, for example. This can provide the fall trajectory control system 1 that is capable of controlling the fall trajectory of the drop object 6, and can drop the bomb as the drop object 6 toward the position appropriate for dropping the drop object 6.

For the configuration of transmitting and receiving the information signal directly between the operation terminal 4 and the drop object 6, for example, the communication between the operation terminal 4 and the drop object 6 may be interrupted due to a shielding obstacle between the operation terminal 4 and the drop object 6, upon approach of the drop object 6 to the ground. The fall trajectory control system 1 according to the first embodiment is capable of performing the communication between the operation terminal 4 and the drop object 6 via the drone 2, thus can reduce a possible interruption of the communication to be blocked between the operation terminal 4 and the drop object 6 via the drone 2.
(2) The drop object 6 includes the vane 64 to receive the air resistance during the fall of the drop object 6, and the angle variation actuator, or the servomotor 65, to vary the angle of the vane 64. The fall trajectory control system 1 includes the angle variation actuator control unit 68a that controls the motion of the servomotor 65 in response to the operation of the trajectory operation unit 45 operated by the operator. Thus, controlling the motion of the servomotor 65 varies the angle of the vane 64, so that the fall trajectory of the drop object 6 can be controlled.
(3) The drop object 6 includes the posture detector 66 that detects the posture of the drop object 6. The drone side receiver 21 receives the information signal from the drop object 6. The trajectory control unit 25b corrects the motion of the servomotor 65 that is controlled by the angle variation actuator control unit 68a in response to the posture detected by the posture detector 66, controlling the fall trajectory of the drop object 6.

Thus, the trajectory control unit 25b is capable of controlling the fall trajectory of the drop object 6 in response to the posture of the drop object 6 dropped from the drone 2. This can correct the fall trajectory of the drop object 6 to the trajectory intended by the operator with the correction of the motion of the servomotor 65 to vary the angle of the vane 64. This is capable of correcting the fall trajectory of the drop object 6 in the situation where the posture of the drop object 6 is varied, for example, due to the rotation that is occurred at the drop object 6 dropped from the drone 2.

(4) The drone 2 and the operation terminal 4 receive and transmit the information signal via the at least one repeater station 8.

Thus, a controllable distance of the drone 2 by the operator with the operation terminal 4 can be varied in response to the number of the repeater station 8. This can extend the controllable distance of the drone 2 by the operator with the operation terminal 4 due to increasing the number of the repeater station 8, for example.

### Modification of the First Embodiment

(1) The drop object 6 dropped from the drone 2 is set to be the contact-type bomb in the first embodiment, however, is not limited to this. Thus, the drop object 6 may be the bomb that explodes at a distance equivalent to a predetermined distance between an object and the bomb (the bomb including a proximity fuze, for example), a grenade, a mortar projectile with a fuze, or an incendiary bomb. The drop object 6 may also be a container storing medicine and food, for example.
(2) The information signal is received and transmitted between the drone 2 and the operation terminal 4 via the repeater station 8 in the first embodiment, however, is not limited to this.

Thus, the drone side receiver 21 may receive the information signal from the operation terminal 4 without the repeater station 8, and the drone side transmitter 22 may transmit the information signal to the operation terminal 4 without the repeater station 8.

This can minimize, for example, a communication delay of the information signal where the information signal is received and transmitted directly between the drone 2 and the operation terminal 4. This can also reduce a possibility of failure in receiving and transmitting the information signal. This can enhance a protection performance against jamming to the reception and transmission of the information signal, as well.
(3) The drone 2 includes the trajectory control unit 25b in the first embodiment, however, is not limited to this. The drop object 6 may include the trajectory control unit 25b.
(4) The drop object 6 includes the angle variation actuator control unit 68a in the first embodiment, however, is not limited to this. The drone 2 may include the angle variation actuator control unit 68a.
(5) The communication between the operation terminal 4 and the drop object 6 is performed via the drone 2 in the first embodiment. However, the communication may automatically be switched to the configuration where the information signal is directly transmitted and received between the operation terminal 4 and the drop object 6 for the failure or the damage of the drone 2, for example.

This can provide the configuration that is capable of controlling the fall trajectory of the drop object 6 using the operation terminal 4 in the state where the information signal is directly transmitted and received between the operation terminal 4 and the drop object 6, for the configuration of the drop object 6 that is set to include the camera such as the imaging unit 23 included in the drone 2.

(6) The drop object 6 includes no propeller in the first embodiment, however, is not limited to this. Thus, the drop object 6 may include a tip side propeller 80 as shown in FIG. 5, for example.

The tip side propeller 80 includes a first rotary wing 80a and a second rotary wing 80b, and is placed at an end of the shell 61 that is a lower end for the dropped shell 61. The tip side propeller 80 includes the first rotary wing 80a and the second rotary wing 80b that are both rotatable to the shell 61.

The first rotary wing 80a and the second rotary wing 80b rotate in opposite directions each other. Thus, the tip side propeller 80 is a contra-rotating propeller.

The configuration shown in FIG. 5 allows the first rotary wing 80a and the second rotary wing 80b to rotate reversely each other, and the ratio of the speed of rotation between the first rotary wing 80a and the second rotary wing 80b to be controlled. Thus, the rotation of the shell 61 can be minimized and the posture of the drop object may easily be controlled. Stability of the speed and the trajectory of the drop object 6 can be improved with the configuration, as well. This can improve the capability to control the fall trajectory of the drop object 6 toward the intended trajectory under the strong wind, for example.

The shell 61 rotates about the axis of rotation defined in the vertical direction for non-contra-rotating propeller. The posture of the drop object 6 is impossible to control due to the rotation of the shell 61. However, the tip side propeller 80 is the contra-rotating propeller, so that the rotation of the shell 61 can be minimized and the posture of the drop object 6 may easily be controlled in rotating the tip side propeller 80.

### Second Embodiment

### Configuration

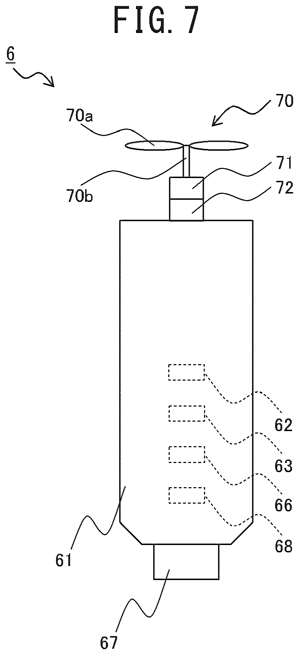

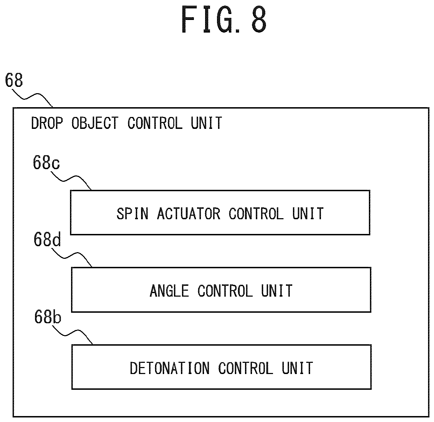

The configuration of the fall trajectory control system 1 according to the second embodiment will now be described with reference to FIG. 7 and FIG. 8 while referring to FIGs. 1 to 6. The description may be omitted for the same configuration of the fall trajectory control system 1 as described according to the first embodiment.

The fall trajectory control system 1 according to the second embodiment has the same configuration as the fall trajectory control system 1 according to the first embodiment except for the configuration of the drone 2 and the drop object 6.

### Drone

The drone 2 according to the second embodiment has the same configuration as the drone 2 according to the first embodiment except for the configuration of the trajectory control unit 25b. Thus, the configuration of the trajectory control unit 25b will only be described below.

The trajectory control unit 25b computes the fall trajectory of the drop object 6 in response to the operation of the trajectory operation unit 45, or the operation status. The computing process of the fall trajectory of the drop object 6 in response to the operation of the trajectory operation unit 45 is performed for the information signal received from the operation terminal 4, which includes the command to operate the fall trajectory of the drop object 6, following the state of holding the drop object 6 released by the drop object holding part 24. The trajectory control unit 25b computes in response to the computed trajectory the drive status of a rotary actuator (the amount of rotation, the speed of rotation) described below, and the drive status of a propeller rotational axis angle variation unit (the amount of rotation, the speed of rotation) described below. The trajectory control unit 25b transmits to the drop object 6 a fundamental trajectory control signal that is the information signal including the computed drive status. Thus, the trajectory control unit 25b controls the fall trajectory of the drop object 6 in response to the operation of the trajectory operation unit 45.

The trajectory control unit 25b corrects the motion of the propeller rotational axis angle variation unit that is controlled by an angle control unit described below in response to the fall trajectory of the drop object 6. The fall trajectory is computed in response to the posture of the shell 61, or the falling aerial posture, and the operation of the trajectory operation unit 45. The correcting process of the motion of the propeller rotational axis angle variation unit is performed for the information signal received from the drop object 6, which includes the drop object posture signal. The fall trajectory of the drop object 6 computed in response to the operation of the trajectory operation unit 45 is the trajectory computed without considering the posture of the shell 61, specifically. Thus, the trajectory control unit 25b corrects the motion or the motion status of the propeller rotational axis angle variation unit (the angle of rotation of the propeller rotational axis angle variation unit, the speed of rotation of the propeller rotational axis angle variation unit) that is controlled by the angle control unit in response to the operation of the trajectory operation unit 45, so that the fall trajectory varied in response to the posture of the shell 61 may be changed to the trajectory computed without considering the posture of the shell 61. The trajectory control unit 25b transmits to the drop object 6 a rotational axis angle variation signal that is the information signal including the corrected motion status of the propeller rotational axis angle variation unit.

### Drop Object

The drop object 6 includes the shell 61, the drop object side receiver 62, the drop object side transmitter 63, the posture detector 66, the fuze 67, a drop object side propeller 70, the rotary actuator 71, the propeller rotational axis angle variation unit 72, and the drop object control unit 68 as shown in FIG. 7.

The shell 61, the drop object side receiver 62, the drop object side transmitter 63, the posture detector 66, and the fuze 67 have the same configuration as their corresponding components according to the first embodiment.

The drop object side propeller 70 includes a rotary wing 70a and a rotary shaft 70b, and is placed at the end of the shell 61 that is an upper end for the dropped shell 61.

The drop object side propeller 70 includes the rotary wing 70a that is rotatable to the shell 61 with the rotation of the rotary shaft 70b. Thus, the drop object side propeller 70 is capable of adding the propulsion to the drop object 6 due to the rotation.

The rotary actuator 71 includes the electric motor, for example, and rotates the drop object side propeller 70, or the rotary shaft 70b.

The propeller rotational axis angle variation unit 72 includes an electric stabilizer that is rotatable around two orthogonal axes, for example, and is capable of varying the angle of the rotary shaft 70b around the two orthogonal axes. The two orthogonal axes are perpendicular to each other viewed from an axial direction of the rotary shaft 70b. Thus, the propeller rotational axis angle variation unit 72 varies the angle of the rotary shaft 70b around the two orthogonal axes that are perpendicular to each other viewed from the axial direction of the rotary shaft 70b, so that the propeller rotational axis angle variation unit 72 varies the angle of the rotary shaft 70b relative to the drop object 6.

The drop object control unit 68 includes the CPU and the memory unit such as the non-volatile memory, for example.

The drop object control unit 68 (DROP OBJECT CONTROL UNIT) includes a rotary actuator control unit 68c (ROTARY ACTUATOR CONTROL UNIT) as shown in FIG. 8. The drop object control unit 68 includes the angle control unit 68d (ANGLE CONTROL UNIT) and the detonation control unit 68b (DETONATION CONTROL UNIT).

The detonation control unit 68b has the same configuration as the detonation control unit 68b according to the first embodiment.

The rotary actuator control unit 68c controls the motion of the rotary actuator 71 in response to the drive status included in the fundamental trajectory control signal transmitted from the drone 2.

The fundamental trajectory control signal is the signal that is computed in response to the operation of the trajectory operation unit 45 operated by the operator as described above. Thus, the rotary actuator control unit 68c controls the motion of the rotary actuator 71 in response to the operation of the trajectory operation unit 45 operated by the operator.

The rotary actuator control unit 68c controls the motion of the rotary actuator 71, so that a fall speed of the falling drop object 6 varies, or accelerates, decelerates, hovers due to the rotation of the drop object side propeller 70. The operator operating the operation terminal 4 may set degree of the variation for the fall speed, for example.

The drop object side propellers 70 is placed at the end of the shell 61 that is the upper end for the dropped shell 61 as described above. This can improve a deceleration performance and a hovering performance of the drop object 6 with the rotary actuator control unit 68c, relative to the configuration where the drop object side propeller 70 is placed at the end of the shell 61 that is the lower end for the dropped shell 61.

The angle control unit 68d controls the motion of the propeller rotational axis angle variation unit 72 in response to the drive status included in the fundamental trajectory control signal transmitted from the drone 2, and the motion status included in the motion correction signal transmitted from the drone 2.

The fundamental trajectory control signal is the signal that is computed in response to the operation of the trajectory operation unit 45 operated by the operator as described above. Thus, the angle control unit 68d controls the motion of the propeller rotational axis angle variation unit 72 in response to the operation of the trajectory operation unit 45 operated by the operator.

The motion correction signal is the signal that is computed in response to the posture of the shell 61, or the falling aerial posture, and the operation of the trajectory operation unit 45 operated by the operator. Thus, the trajectory control unit 25b corrects the motion of the propeller rotational axis angle variation unit 72 controlled by the angle control unit 68d in response to the posture of the shell 61 detected by the posture detector 66, controlling the fall trajectory of the drop object 6.

### Motion

The motion performed by the fall trajectory control system 1 according to the second embodiment will now be described with reference to FIGs. 1 to 8. The description may be omitted for the same motion of the fall trajectory control system 1 as described according to the first embodiment.

For the drop object 6 dropped from the drone 2, and the trajectory operation unit 45 operated by the operator in using the fall trajectory control system 1, the trajectory control unit 25b at the drone 2 that receives the operation status signal computes the fall trajectory of the drop object 6, which is in response to the operation status of the trajectory operation unit 45. The trajectory control unit 25b transmits to the drop object 6 the fundamental trajectory control signal.

The rotary actuator control unit 68c at the drop object 6 that receives the fundamental trajectory control signal controls the motion of the rotary actuator 71, which is in response to the drive status included in the fundamental trajectory control signal. The angle control unit 68d controls the motion of the propeller rotational axis angle variation unit 72, as well, which is in response to the drive status included in the fundamental trajectory control signal, so that the angle control unit 68d varies the angle of the rotary shaft 70b relative to the drop object 6. Thus, the angle control unit 68d controls the fall trajectory of the drop object 6.

The posture detector 66 at the drop object 6 that is dropped from the drone 2 detects the posture of the shell 61, or the falling aerial posture, so that the drop object posture signal is transmitted to the drone 2.

The trajectory control unit 25b at the drone 2 that receives the drop object posture signal corrects the motion of the propeller rotational axis angle variation unit 72 that is controlled by the angle control unit 68d, which is in response to the trajectory computed in response to the posture of the shell 61 and the operation of the trajectory operation unit 45. The trajectory control unit 25b transmits the motion correction signal to the drop object 6.

The angle control unit 68d at the drop object 6 that receives the motion correction signal controls the motion of the propeller rotational axis angle variation unit 72, which is in response to the motion status included in the motion correction signal, so that the angle control unit 68d varies the angle of the rotary shaft 70 relative to the drop object 6. Thus, the trajectory control unit 25b corrects the motion status of the propeller rotational axis angle variation unit 72 that is controlled by the angle control unit 68d, and controls the fall trajectory of the drop object 6, so that the fall trajectory varied in response to the posture of the shell 61 may be changed to the trajectory computed without considering the posture of the shell 61.

For the operator operating the operation terminal 4 with the visual confirmation of the image displayed on the display 43 to accelerate the fall speed of the drop object 6, the rotary actuator control unit 68c controls the motion of the rotary actuator 71, so that the fall speed of the falling drop object 6 is accelerated with the rotation of the drop object side propeller 70.

The second embodiment described above is an example of the present invention, and the present invention is not limited to the second embodiment described above. For embodiments other than the second embodiment, the present invention can make various changes in response to the design within the scope that does not deviate from the technical idea related to the present invention.

### Effects of the Second Embodiment

The fall trajectory control system 1 according to the second embodiment can produce the effects described below.
(1) The drop object 6 includes the drop object side propeller 70 that adds the propulsion to the drop object 6 due to the rotation, the rotary actuator 71 that rotates the drop object side propeller 70, and the propeller rotational axis angle variation unit 72 that varies the angle of the rotary shaft 70b of the drop object side propeller 70 relative to the drop object 6. The fall trajectory control system 1 includes the rotary actuator control unit 68c that controls the motion of the rotary actuator 71 in response to the operation of the trajectory operation unit 45 operated by the operator, and the angle control unit 68d that controls the motion of the propeller rotational axis angle variation unit 72 in response to the operation of the trajectory operation unit 45 operated by the operator.

Thus, controlling the motion of the rotary actuator 71 and the propeller rotational axis angle variation unit 72 varies a rotation status of the drop object side propeller 70 and the angle of the rotary shaft 70b relative to the drop object 6, so that the fall trajectory of the drop object 6 can be controlled.

Adding the propulsion to the drop object 6 with the rotation of the drop object side propeller 70 may easily control a falling direction of the drop object 6, and varying the angle of the rotary shaft 70b relative to the drop object 6 may easily control the fall trajectory of the drop object 6.

(2) The propeller rotational axis angle variation unit 72 varies the angle of the rotary shaft 70b around the two orthogonal axes that are perpendicular to each other viewed from the axial direction of the rotary shaft 70b, so that the propeller rotational axis angle variation unit 72 varies the angle of the rotary shaft 70b relative to the drop object 6.

Thus, the propeller rotational axis angle variation unit 72 may easily control the fall trajectory of the drop object 6, relative to the configuration where the propeller rotational axis angle variation unit 72 varies the angle of the rotary shaft 70b around only one axis.

(3) The drop object 6 includes the posture detector 66 that detects the posture of the drop object 6, and the drone side receiver 21 receives the information signal from the drop object 6. The trajectory control unit 25b corrects the motion of the propeller rotational axis angle variation unit 72 that is controlled by the angle control unit 68d in response to the posture detected by the posture detector 66, controlling the fall trajectory of the drop object 6.

Thus, the trajectory control unit 25b is capable of controlling the fall trajectory of the drop object 6 in response to the posture of the drop object 6 dropped from the drone 2. This can correct the fall trajectory of the drop object 6 to the trajectory intended by the operator with the correction of the motion of the propeller rotational axis angle variation unit 72 to vary the angle of the rotary shaft 70b relative to the drop object 6. This is capable of correcting the fall trajectory of the drop object 6 in the situation where the posture of the drop object 6 is varied, for example, due to the rotation that is occurred at the drop object 6 dropped from the drone 2.

(4) The rotary actuator control unit 68c controls the motion of the rotary actuator 71, so that the fall speed of the falling drop object 6 varies due to the rotation of the drop object side propeller 70.

Thus, time for the drop object 6 to reach the target such as the fallen tree can be varied.

The situation is presumed that the rotary actuator control unit 68c controls the motion of the rotary actuator 71, so that the fall speed of the falling drop object 6 is accelerated due to the rotation of the drop object side propeller 70, for example. The fall of the drop object 6 due to free fall is accelerated with gravitational acceleration, that is 9.8 [m/s²]. The rotation of the drop object side propeller 70 adds the propulsion of α [m/s²] to the drop object 6, so that the drop object 6 can be accelerated to fall with the gravitational acceleration of 9.8 [m/s²] and *α* [m/s²].

Thus, for the situation using the fall trajectory control system 1, for example, to eliminate a harmful animal or a living thing such as a bear, the drop object 6 can reach the target living thing before the target living thing notices the approach of the drop object 6. The time for the target living thing to avoid the drop object 6 can be reduced, as well.

### Modification of the Second Embodiment

(1) The drop object 6 includes the rotary actuator control unit 68c in the second embodiment, however, is not limited to this. The drone 2 may include the rotary actuator control unit 68c.
(2) The drop object 6 includes the angle control unit 68d in the second embodiment, however, is not limited to this. The drone 2 may include the angle control unit 68d.
(3) The rotary actuator control unit 68c controls the motion of the rotary actuator 71, so that the fall speed of the falling drop object 6 varies due to the rotation of the drop object side propeller 70 in the second embodiment, however, is not limited to this. Thus, the rotary actuator control unit 68c may control the motion of the rotary actuator 71, so that the fall trajectory of the drop object 6 varies due to the rotation of the drop object side propeller 70. The propeller rotational axis angle variation unit 72 may vary the angle of the rotary shaft 70b, so that the fall trajectory of the drop object 6 varies due to the rotation of the drop object side propeller 70, as well. This configuration allows the drop object 6 to move to all directions.
(4) The drone 2 includes the trajectory control unit 25b in the second embodiment, however, is not limited to this. The drop object 6 may include the trajectory control unit 25b.

### Other Embodiments

Embodiments of the present invention are described as above. However, statements and drawings that form part of this disclosure should not be understood to limit the present invention. This disclosure is evident to those skilled in the art for providing various alternative embodiments, examples, and operation technologies.

The present invention is obvious to include various embodiments that are not described herein, such as the configuration arbitrarily applying each configuration described in the above embodiments. Thus, the technical scope of the present invention may only be defined with the invention specifying matters pertaining to the scope of claims that are reasonable based on the above description.

### REFERENCE SIGNS LIST

1···FALL TRAJECTORY CONTROL SYSTEM, 2···DRONE, 21···DRONE SIDE RECEIVER, 22···DRONE SIDE TRANSMITTER, 23···IMAGING UNIT, 24··· DROP OBJECT HOLDING PART, 25···OPERATION PART, 25a···DROP CONTROL UNIT, 25b··· TRAJECTORY CONTROL UNIT, 25c···SAFETY DEVICE CONTROL UNIT, 4 ··· OPERATION TERMINAL, 41 ··· TERMINAL SIDE RECEIVER, 42 ··· TERMINAL SIDE TRANSMITTER, 43···DISPLAY, 44···CONTROL OPERATION UNIT, 45···TRAJECTORY OPERATION UNIT, 46···SAFETY DEVICE COMMAND SECTION, 47···DROP COMMAND SECTION, 48···EXPLOSION COMMAND SECTION, 6··· DROP OBJECT, 61···SHELL, 62···DROP OBJECT SIDE RECEIVER, 63···DROP OBJECT SIDE TRANSMITTER, 64···VANE, 65···SERVOMOTOR, 66···POSTURE DETECTOR, 67··· FUZE, 68···DROP OBJECT CONTROL UNIT, 68a···ANGLE VARIATION ACTUATOR CONTROL UNIT, 68b···DETONATION CONTROL UNIT, 68c···ROTARY ACTUATOR CONTROL UNIT, 68d···ANGLE CONTROL UNIT, 70··· DROP OBJECT SIDE PROPELLER, 70a···ROTARY VANE, 70b···ROTARY SHAFT, 71 ···ROTARY ACTUATOR, 72···PROPELLER ROTATIONAL AXIS ANGLE VARIATION UNIT, 8···REPEATER STATION, 80···TIP SIDE PROPELLER, 80a···FIRST ROTARY WING, 80b···SECOND ROTARY WING

## Claims

1. A fall trajectory control system comprising:
a drone capable of flying by rotating a drone side propeller, the drone including a drop object holding part capable of holding a drop object and releasing a state of holding the drop object, the drone or the drop object including an imaging unit configured to capture an image in at least a vertically downward direction; and
an operation terminal used by an operator to control the drone,
wherein the drone includes:
a drone side transmitter configured to transmit an information signal to the operation terminal and the drop object; and
a drone side receiver configured to receive an information signal from the operation terminal, and
the operation terminal includes;
a display unit configured to display the image captured by the imaging unit; and
a trajectory operation unit operated by the operator, the trajectory operation unit being used to operate a fall trajectory of the drop object after the drop object holding part releases the state of holding the drop object, and
the drone or the drop object includes a trajectory control unit configured to control the fall trajectory of the drop object in response to operation of the trajectory operation unit operated by the operator who visually recognizes the image displayed on the display unit.

2. The fall trajectory control system according to claim 1, wherein
the drop object includes:
a vane configured to receive air resistance during a fall of the drop object; and
an angle variation actuator configured to vary an angle of the vane, and
the fall trajectory control system includes an angle variation actuator control unit configured to control operation of the angle variation actuator in response to the operation of the trajectory operation unit operated by the operator.

3. The fall trajectory control system according to claim 2, wherein
the drop object includes a posture detector configured to detect a posture of the drop object, and
the drone side receiver further receives an information signal from the drop object, and
the trajectory control unit controls the fall trajectory of the drop object by correcting the operation of the angle variation actuator controlled by the angle variation actuator control unit depending on the posture of the drop object detected by the posture detector.

4. The fall trajectory control system according to claim 1, wherein
the drop object includes:
a drop object side propeller configured to rotate to add propulsion to the drop object;
a rotary actuator configured to rotate the drop object side propeller; and
a propeller rotational axis angle variation unit configured to vary an angle of a rotary shaft of the drop object side propeller relative to the drop object, and
the fall trajectory control system includes:
a rotary actuator control unit configured to control operation of the rotary actuator in response to the operation of the trajectory operation unit operated by the operator; and
an angle control unit configured to control operation of the propeller rotational axis angle variation unit in response to the operation of the trajectory operation unit operated by the operator.

5. The fall trajectory control system according to claim 4, wherein the propeller rotational axis angle variation unit varies the angle of the rotary shaft of the drop object side propeller relative to the drop object by varying the angle of the rotary shaft around two orthogonal axes perpendicular to each other viewed from an axial direction of the rotary shaft.

6. The fall trajectory control system according to claim 4, wherein
the drop object includes a posture detector configured to detect a posture of the drop object, and
the trajectory control unit controls the fall trajectory of the drop object by correcting the operation of the propeller rotational axis angle variation unit controlled by the angle control unit depending on the posture of the drop object detected by the posture detector.

7. The fall trajectory control system according to claim 4, wherein the rotary actuator control unit controls the operation of the rotary actuator so as to vary a fall speed of the falling drop object by the rotation of the drop object side propeller.

8. The fall trajectory control system according to claim 4, wherein
the rotary actuator control unit controls the operation of the rotary actuator so as to vary the fall trajectory of the drop object by the rotation of the drop object side propeller, and
the propeller rotational axis angle variation unit varies the angle of the rotary shaft so as to vary the fall trajectory of the drop object by the rotation of the drop object side propeller.

9. The fall trajectory control system according to claim 1, wherein the drone and the operation terminal receive and transmit an information signal via at least one repeater station.
